# EUROPÄISCHE PATENTANMELDUNG

(11) **EP 0 962 348 A2**
(43) Veröffentlichungstag der Anmeldung: **08.12.1999**
(21) Anmeldenummer: 99110600.6
(22) Anmeldetag: 04.06.1999
(51) Int. Cl.: B60J 7/22

(54) **Abdeckvorrichtung und Windschutzeinrichtung für ein Cabriolet**

(30) Priorität: 05.06.1998 DE 29810087 U
(71) Anmelder: Demel, Hans, 68519 Viernheim (DE)
(72) Erfinder: Demel, Hans, 68519 Viernheim (DE)
(74) Vertreter: Sartorius, Peter, Dipl.-Ing.

(57) **Zusammenfassung**

1. Die Abdeckvorrichtung 1 besteht aus einem einzigen oder aus einem ersten 2 und einem zweiten Abdeckteil 3,
   1.1. die beiden Abdeckteile 2, 3 sind über eine Verbindungseinrichtung 4 fest, lösbar und/oder beweglich miteinander verbunden,
   1.2. jedes Abdeckteil 2, 3 weist zumindest eine Erhebung 5 oder zwei mit Abstand zueinander angeordnete Erhebungen 5, 6 auf, denen eine Windschutzeinrichtung 7 zugeordnet ist,
   1.3. das erste und zweite Abdeckteil 2, 3, die Erhebungen 5, 6 und/oder die Windschutzeinrichtung 7 sind in einen Raum 8 zwischen dem Fahrzeugsitz und dem rückwärtigen Teil der Fahrzeugkarosse einsetzbar.

## Beschreibung

**Die Erfindung bezieht sich auf** eine Abdeckvorrichtung für Kraftfahrzeuge.

**Es ist bereits eine Abdeckvorrichtung** für ein Cabriolet bekannt. Die Abdeckvorrichtung besteht aus einem lösbar hinter dem Fahrersitz einbaubaren, teilweise elastischen Abdeckteil, das aber nicht mit der Windschutzeinrichtung derart zu einem Bauteil integrierbar ist, daß diese als Baueinheit insgesamt entfernt werden kann. Die Montage dieser Einrichtung ist sehr zeitaufwendig.

**Demgemäß besteht die Erfindungsaufgabe darin**, eine Abdeckvorrichtung und Windschutzeinrichtung derart auszubilden und anzuordnen, daß sie in sehr kurzer Zeit ein- und ausgebaut werden kann.

**Gelöst wird die Aufgabe erfindungsgemäß durch** folgende Merkmale:
1. Die Abdeckvorrichtung besteht aus einem einzigen oder aus einem ersten und einem zweiten Abdeckteil,
1.1. die beiden Abdeckteile sind über eine Verbindungseinrichtung fest, lösbar und/oder beweglich miteinander verbunden,
1.2. jedes Abdeckteil weist zumindest eine Erhebung oder zwei mit Abstand zueinander angeordnete Erhebungen auf, denen eine Windschutzeinrichtung zugeordnet ist,
1.3. das erste und zweite Abdeckteil, die Erhebungen und/oder die Windschutzeinrichtung sind in einen Raum zwischen dem Fahrzeugsitz und dem rückwärtigen Teil der Fahrzeugkarosse einsetzbar.

Durch die vorteilhafte Ausbildung und Anordnung der beiden Abdeckteile bzw. der Abdeckvorrichtung, die insbesondere als Sportabdeckvorrichtung ausgebildet ist, können insbesondere unterschiedlich geformte oder gebogene, rechteckförmige oder ovale Abdeckteile in einen Raum zwischen Fahrersitz und dem Kofferraum oder dem hinteren Teil der Fahreugkarosse untergebracht werden, so daß in der eingebauten Stellung des Abdeckteils die Sicht des Fahrers nach hinten nicht behindert wird. Im Bedarfsfall kann die Abdeckvorrichtung, die auch als Windschutzeinrichtung fungiert, in kurzer Zeit hinter dem Fahrersitz montiert werden und verhindert dadurch die normalerweise auftretenden Turbulenzen in der Fahrzeugzelle. Die Windschutzeinrichtung ist dazu so ausgebildet, daß sie den Freiraum hinter dem Fahrzeugsitz vollständig ausfüllt, so daß, wie bereits erwähnt, keine Windturbulenzen hinter den Fahrzeugsitzen auftreten.

Hierzu ist es vorteilhaft, daß die Erhebung konvex ausgebildet ist, im Bereich des Fahrzeugsitzes ihre größte Höhe aufweist und von dieser Stelle aus in Richtung des hinteren Endes des Fahrzeugs allmählich abnimmt. Hierdurch wird eine strömungstechnisch einwandfreie Windschutzeinrichtung geschaffen, die vermeidet, daß Turbulenzen in der Fahrzeugzelle auftreten. Außerdem wird die Sicht durch den Einbau der Windschutzeinrichtung nicht beeinträchtigt.

Eine zusätzliche Möglichkeit ist gemäß einer Weiterbildung der erfindungsgemäßen Abdeckvorrichtung, daß in einen konvex ausgebildeten Raum der einen Erhebung die zweite Erhebung zumindest teilweise plazierbar ist. Soll, aus welchen Gründen auch immer, die Abdeckvorrichtung entfernt und im Kofferraum untergebracht werden, so kann sie in sehr kurzer Zeit zusammengelegt und auf kleinstem Raum untergebracht werden.

In weiterer Ausgestaltung der Erfindung ist es vorteilhaft, daß in den Zwischenraum der mit Abstand zueinander angeordneten Erhebungen zumindest ein Teil der Windschutzeinrichtung plazierbar und/oder lösbar einsetzbar ist.

Gemäß einer bevorzugten Ausführungsform der erfindungsgemäßen Lösung ist schließlich vorgesehen, daß die in Richtung des vorderen Endes des Fahrzeugs zeigende Oberfläche der Erhebung mit Bezug auf die Standfläche des Fahrzeugs einen Winkel α bildet, der zwischen 50° und 90° ist.

Von besonderer Bedeutung ist für die vorliegende Erfindung, daß die in Richtung des vorderen Endes des Fahrzeugs zeigenden Oberflächen der Erhebungen und der aufrechtstehende Teil der Windschutzeinrichtung, mit Bezug auf das Fahrzeug, in etwa auf der gleichen Querebene liegen. Hierdurch erhält man auf kostengünstige Weise eine Windschutzeinrichtung und eine Abdeckvorrichtung, die zusammen eine Baueinheit bilden können.

Im Zusammenhang mit der erfindungsgemäßen Ausbildung und Anordnung ist es von Vorteil, daß der im Zwischenraum der mit Abstand zueinander angeordneten Erhebungen vorgesehene Teil der Windschutzeinrichtung aus einem durchsichtigen Material gebildet ist. Hierdurch wird die Sicht nach hinten stets freigehalten.

Vorteilhaft ist es ferner, daß der im Zwischenraum der mit Abstand zueinander angeordneten Erhebungen vorgesehene Teil der Windschutzeinrichtung aus einem durchsichtigen Material gebildet ist, das aus einem sieb- oder gitterartigen Werkstoff oder aus einem durchsichtigen Kunststoff-Material besteht, in dem zahlreiche kleine Öffnungen vorgesehen sind. Hierdurch wird der Luftstrom bwz. der Luftwirbel in eine langsam strömende Luft aufgeteilt. Dadurch wird verhindert, daß ein Unterdruck in der Fahrgastzelle entsteht.

Außerdem ist es vorteilhaft, daßdie beiden lösbar miteinander verbindbaren Abdeckteile stirnseitig eine Nut bzw. eine mit der Nut in Eingriff bringbare Feder aufweisen.

Ferner ist es vorteilhaft, daß die beiden lösbar miteinander verbindbaren Abdeckteile über eine Verriegelungseinrichtung lösbar miteinander verbindbar sind.

Eine zusätzliche Möglichkeit ist gemäß einer Weiterbildung der erfindungsgemäßen Abdeckvorrichtung, daß die beiden lösbar miteinander verbindbaren Abdeckteile und/oder die beiden Erhebungen mit einem Rahmenteil oder einem Überrollbügel wirkungsmäßig in Verbindung stehen oder dieser in die Abdeckteile oder Erhebungen integriert ist.

In weiterer Ausgestaltung der Erfindung ist es vorteilhaft, daß die beiden lösbar miteinander verbindbaren Abdeckteile und/oder die beiden Erhebungen zur Aufnahme des Überrollbügels eine oder mehrere Öffnungen aufweisen.

Wie zuvor beschrieben gewährleistet die Ausbildung, daß die Erhebungen mit dem Abdeckteil lösbar verbunden sind.

In weiterer Ausgestaltung der Erfindung ist es vorteilhaft, daß die Abdeckteile einteilig ausgebildet sind.

Vorteilhaft ist es ferner, daß zumindest Teile der Windschutzeinrichtung aus entspiegeltem Kunstglas bestehen und daß die Erhebungen mit ihren in Fahrtrichtung des Kraftfahrzeugs zeigenden Oberflächen zumindest dem oberen Teil des Fahrzeugsitzes oder einer Kopfstütze bzw. der Rückseite der Kopfstütze angepaßt sind.

Ferner ist es vorteilhaft, daß die eine Erhebung fest und die andere Erhebung über eine im Abdeckteil vorgesehene Öffnung lösbar mit dem Abdeckteil verbunden ist und daß die beiden Abdeckteile und/oder die Erhebungen aufeinanderklappbar ausgebildet sind.

**Weitere Vorteile und Einzelheiten der Erfindung sind in den Patentansprüchen** und in der Beschreibung erläutert und in den Figuren dargestellt. Es zeigt:
- Figur 1: eine perspektivische Ansicht des Fahrzeugs mit der Abdeckvorrichtung von vorne und zwei Erhebungen,
- Figur 2: eine perspektivische Ansicht der Abdeckvorrichtung von hinten,
- Figur 3: eine perspektivische Ansicht der Abdeckvorrichtung im in das Fahrzeug eingebauten Zustand in der Ansicht von hinten,

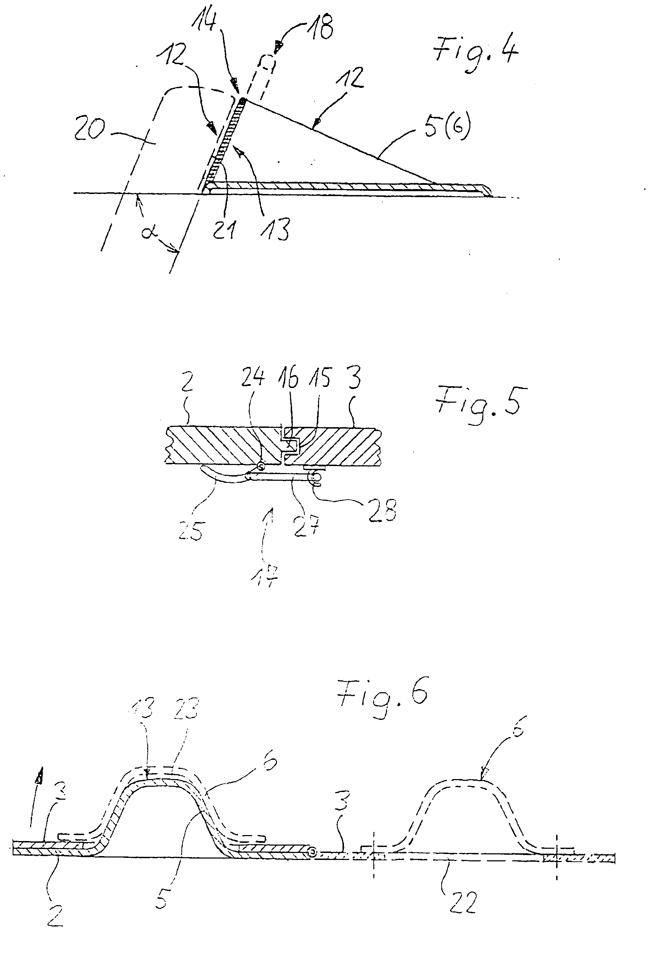

- Figur 4: eine Schnittdarstellung der Erhebung und der Abdeckvorrichtung mit Überrollbügel,
- Figur 5: eine Verriegelungsvorrichtung für die zusammenfügbaren Abdeckteile,
- Figur 6: ein weiteres Ausführungsbeispiel der stapelbaren Erhebungen und Abdeckteile.

In der Zeichnung ist mit 1 eine Abdeckvorrichtung für Kraftfahrzeuge bezeichnet. Die Abdeckvorrichtung 1 besteht aus einem einzigen Abdeckteil 2. Es ist jedoch auch möglich, die Abdeckvorrichtung 1 aus einem ersten 2 und einem zweiten Abdeckteil 3 zu bilden. Die Abdeckvorrichtung ist hier eine Sportabdeckung mit integriertem Windschutz für offene Personenwagen.

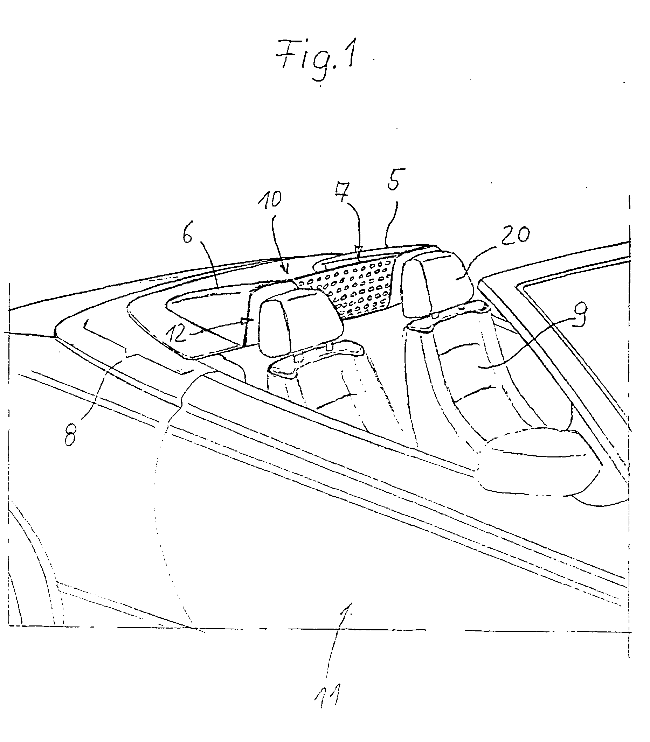

Die beiden Abdeckteile 2, 3 sind gemäß Fig. 1 oder 5 über eine Verriegelungseinrichtung 17 fest, lösbar und/oder beweglich miteinander verbunden, so daß sie zur Unterbringung im Kofferraum eines Fahrzeugs 11 auf kleinstem Raum untergebracht werden können. Die Verriegelungseinrichtung 17 weist einen um ein Gelenk 24 verschwenkbaren Hebel 25 und eine Lasche 27 auf, die in einen Haken 28 eingehängt wird.

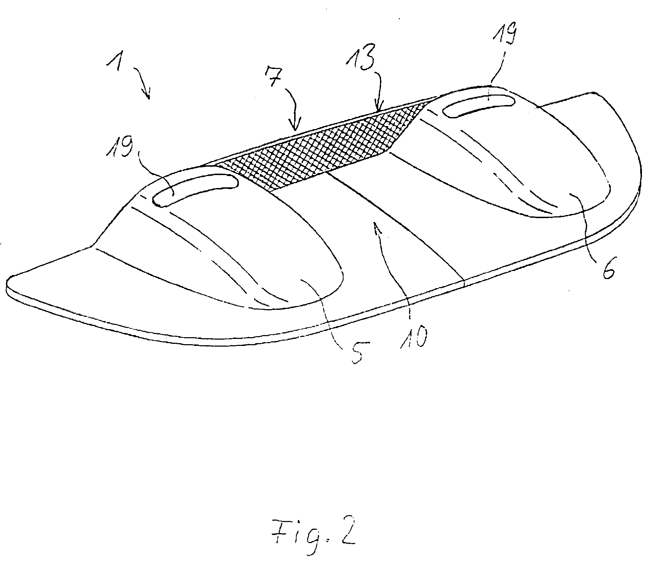

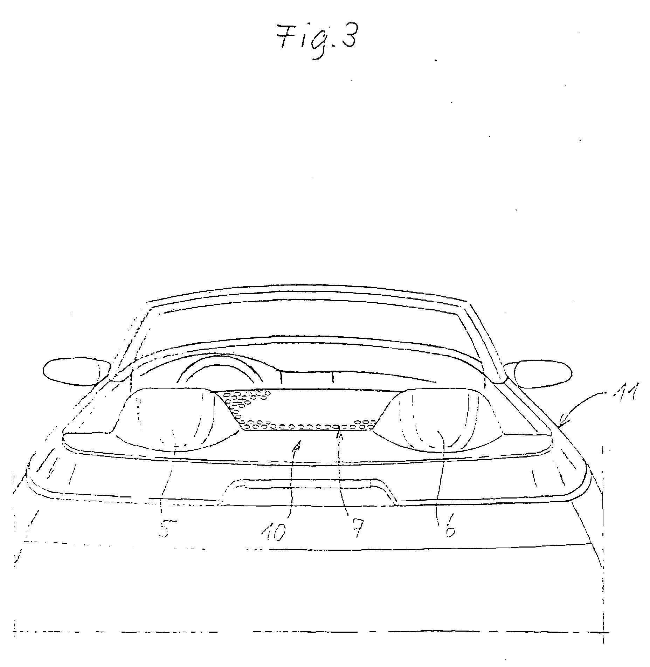

Jedes Abdeckteil 2, 3 weist zumindest eine Erhebung 5 oder zwei mit Abstand zueinander angeordnete Erhebungen 5, 6 auf, denen eine Windschutzeinrichtung 7 zugeordnet sein kann (Fig. 2, 3).

Das erste und zweite Abdeckteil 2, 3, die Erhebungen 5, 6 und/oder eine Windschutzeinrichtung 7 kann in einen Raum 8 zwischen einem Fahrzeugsitz 9 und dem rückwärtigen Teil der Fahrzeugkarosse eingesetzt werden.

Die Erhebung 5 oder 6 ist hohlförmig und konvex ausgebildet und weist im Bereich des Fahrzeugsitzes 9 bzw. einer Kopfstütze 20ihre größte Höhe auf und nimmt in Richtung des hinteren Endes des Fahrzeugs allmählich ab.

In einen konvex ausgebildeten Raum 23 der Erhebung 5 ist die zweite Erhebung 6 zumindest teilweise plazierbar (Fig. 6).

In einen Zwischenraum 10 der mit Abstand zueinander angeordneten Erhebungen 5, 6 kann - wie bereits erwähnt - zumindest ein Teil der Windschutzeinrichtung 7 plaziert und/oder lösbar eingesetzt werden.

Die in Richtung des vorderen Endes des Fahrzeugs 11 zeigende Oberfläche 12 der Erhebung 5 oder 6 bildet mit Bezug auf die Standfläche des Fahrzeugs 11 einen Winkel α der zwischen 50° und 90°.

In Richtung des vorderen Endes des Fahrzeugs 11 zeigende Oberflächen 12 der beiden Erhebungen 5, 6 und ein aufrechtstehender Teil 13 der Windschutzeinrichtung 7 liegen, mit Bezug auf das Fahrzeug 11, in etwa auf einer gleichen Querebene 14.

Der im Zwischenraum 10 der mit Abstand zueinander angeordneten Erhebungen 5, 6 vorgesehene Teil der Windschutzeinrichtung 7 ist aus einem durchsichtigen Material gebildet.

Das Material kann auch aus einem sieb- oder gitterartigen Werkstoff oder aus einem durchsichtigen Kunststoff-Material bestehen, in dem zahlreiche kleine Öffnungen vorgesehen sind. Zumindest Teile der Windschutzeinrichtung 7 können aus entspiegeltem Kunstglas bestehen.

Die Erhebungen 5, 6 mit ihren in Fahrtrichtung des Kraftfahrzeugs 11 zeigenden Oberflächen sind zumindest dem oberen Teil des Fahrzeugsitzes 9 oder der Kopfstütze 20 oder einer entsprechenden Rückseite 21 angepaßt, um auf diese Weise die Turbulenzen im Fahrzeugraum gering zu halten.

Die beiden lösbar miteinander verbindbaren Abdeckteile 2, 3 (Fig.5) weisen stirnseitig eine Nut 15 bzw. eine mit der Nut 15 in Eingriff bringbare Feder 16 auf. Die beiden lösbar miteinander verbindbaren Abdeckteile 2, 3 können - wie bereits erwähnt - über die Verriegelungseinrichtung 17 lösbar miteinander verbunden und in ihrer Stellung gesichert werden.

Mit den beiden lösbar miteinander verbindbaren Abdeckteilen 2, 3 und/oder den beiden Erhebungen 5, 6 kann ein Überrollbügel 18 wirkungsmäßig in Verbindung stehen oder in die Abdeckteile oder Erhebungen integriert sein.

Hierzu weisen die beiden lösbar miteinander verbindbaren Abdeckteile 2, 3 und/oder die beiden Erhebungen 5, 6 zur Aufnahme des Überrollbügels 18 eine oder mehrere Öffnungen 19 auf, in die der Überrollbügel 18 eingeschoben und dann mit dem Fahrzeug 11 verbunden werden kann.

Nach einem anderen Ausführungsbeispiel (Fig. 6) ist die Erhebung 5 fest und die Erhebung 6 über eine im Abdeckteil 3 vorgesehene Öffnung 22 lösbar mit dem Abdeckteil 3 verbunden, so daß die beiden Abdeckteile 2, 3 und/oder die Erhebungen 5, 6 aufeinanderklappbar ausgebildet sind. Hierzu können die beiden Abdeckteile 2, 3 über eine Gelenkeinrichtung schwenkbar miteinander verbunden werden. Nach Lösen der Erhebung 6 kann das Abdeckteil 3 um 180° verschwenkt und dadurch auf das Abdeckteil 2 geklappt werden. Jetzt läßt sich die Erhebung 6 auf die Erhebung 5 setzen.

### Bezugszeichenliste

- 1: Abdeckvorrichtung bzw. Sportabdeckvorrichtung
- 2: erstes Abdeckteil
- 3: zweites Abdeckteil
- 4: Verbindungseinrichtung
- 5: Erhebung
- 6: Erhebung
- 7: Windschutzeinrichtung
- 8: Raum
- 9: Fahrzeugsitz
- 10: Zwischenraum
- 11: Kraftfahrzeug
- 12: Oberfläche der Erhebung
- 13: aufrechtstehender Teil der Windschutzeinrichtung 7
- 14: Querebene
- 15: Nut
- 16: Feder
- 17: Verriegelungseinrichtung
- 18: Überrollbügel
- 19: Öffnung
- 20: Kopfstütze
- 21: Rückseite der Kopfstütze
- 22: Öffnung
- 23: konvex ausgebildeter Raum
- 24: Gelenk
- 25: Hebel
- 27: Lasche
- 28: Haken

## Patentansprüche

1. Abdeckvorrichtung für Kraftfahrzeuge, **gekennzeichnet durch folgende Merkmale:**
1. Die Abdeckvorrichtung (1) besteht aus einem einzigen oder aus einem ersten (2) und einem zweiten Abdeckteil (3),
1.1. die beiden Abdeckteile (2, 3) sind über eine Verbindungseinrichtung (4) fest, lösbar und/oder beweglich miteinander verbunden,
1.2. jedes Abdeckteil (2, 3) weist zumindest eine Erhebung (5) oder zwei mit Abstand zueinander angeordnete Erhebungen (5, 6) auf, denen eine Windschutzeinrichtung (7) zugeordnet ist,
1.3. das erste und zweite Abdeckteil (2, 3), die Erhebungen (5, 6) und/oder die Windschutzeinrichtung (7) sind in einen Raum (8) zwischen dem Fahrzeugsitz und dem rückwärtigen Teil der Fahrzeugkarosse einsetzbar.

2. Abdeckvorrichtung nach Anspruch 1, **dadurch gekennzeichnet,** daß die Erhebung (5, 6) konvex ausgebildet ist, im Bereich des Fahrzeugsitzes (9) ihre größte Höhe aufweist und in Richtung des hinteren Endes des Fahrzeugs allmählich abnimmt.

3. Abdeckvorrichtung nach Anspruch 1 oder 2, **dadurch gekennzeichnet,** daß in einen konvex ausgebildeten Raum (23) der einen Erhebung (5) die zweite Erhebung (6) zumindest teilweise plazierbar ist.

4. Vorrichtung nach Anspruch 1, **dadurch gekennzeichnet,** daß in den Zwischenraum (10) der mit Abstand zueinander angeordneten Erhebungen (5, 6) zumindest ein Teil der Windschutzeinrichtung (7) plazierbar und/oder lösbar einsetzbar ist.

5. Vorrichtung nach einem der vorhergehenden Ansprüche, **dadurch gekennzeichnet,** daß die in Richtung des vorderen Endes des Fahrzeugs (11) zeigende Oberfläche (12) der Erhebung (5, 6) mit Bezug auf die Standfläche des Fahrzeugs (11) einen Winkel α bildet, der zwischen 50° und 90° ist.

6. Vorrichtung nach Anspruch 1, **dadurch gekennzeichnet**, daß die in Richtung des vorderen Endes des Fahrzeugs (11) zeigenden Oberflächen (12) der Erhebungen (5, 6) und der aufrechtstehende Teil (13) der Windschutzeinrichtung (7), mit Bezug auf das Fahrzeug (11), in etwa auf der gleichen Querebene (14) liegen.

7. Vorrichtung nach einem der vorhergehenden Ansprüche, **dadurch gekennzeichnet,** daß der im Zwischenraum (10) der mit Abstand zueinander angeordneten Erhebungen (5, 6) vorgesehene Teil der Windschutzeinrichtung (7) aus einem durchsichtigen Material gebildet ist.

8. Vorrichtung nach einem der vorhergehenden Ansprüche, **dadurch gekennzeichnet,** daß der im Zwischenraum (10) der mit Abstand zueinander angeordneten Erhebungen (5, 6) vorgesehene Teil der Windschutzeinrichtung (7) aus einem durchsichtigen Material gebildet ist, das aus einem sieb- oder gitterartigen Werkstoff oder aus einem durchsichtigen Kunststoff-Material besteht, in dem zahlreiche kleine Öffnungen vorgesehen sind.

9. Vorrichtung nach einem der vorhergehenden Ansprüche, **dadurch gekennzeichnet,** daß die beiden lösbar miteinander verbindbaren Abdeckteile (2, 3) stirnseitig eine Nut (15) bzw. eine mit der Nut (15) in Eingriff bringbare Feder (16) aufweisen.

10. Vorrichtung nach einem der vorhergehenden Ansprüche, **dadurch gekennzeichnet,** daß die beiden lösbar miteinander verbindbaren Abdeckteile (2, 3) über eine Verriegelungseinrichtung (17) lösbar miteinander verbindbar sind.

11. Vorrichtung nach einem der vorhergehenden Ansprüche, **dadurch gekennzeichnet,** daß die beiden lösbar miteinander verbindbaren Abdeckteile (2, 3) und/oder die beiden Erhebungen (5, 6) mit einem Rahmenteil oder einem Überrollbügel (18) wirkungsmäßig in Verbindung stehen oder dieser in die Abdeckteile oder Erhebungen integriert ist.

12. Vorrichtung nach einem der vorhergehenden Ansprüche, **dadurch gekennzeichnet,** daß die beiden lösbar miteinander verbindbaren Abdeckteile (2, 3) und/oder die beiden Erhebungen (5, 6) zur Aufnahme des Überrollbügels (18) eine oder mehrere Öffnungen (19) aufweisen.

13. Vorrichtung nach einem der vorhergehenden Ansprüche, **dadurch gekennzeichnet,** daß die Erhebungen (5, 6) mit dem Abdeckteil (2, 3) lösbar verbunden sind.

14. Vorrichtung nach einem der vorhergehenden Ansprüche, **dadurch gekennzeichnet,** daß die Abdeckteile (2, 3) einteilig ausgebildet sind.

15. Vorrichtung nach einem der vorhergehenden Ansprüche, **dadurch gekennzeichnet**, daß zumindest Teile der Windschutzeinrichtung (7) aus entspiegeltem Kunstglas bestehen.

16. Vorrichtung nach einem der vorhergehenden Ansprüche, **dadurch gekennzeichnet,** daß die Erhebungen (5, 6) mit ihren in Fahrtrichtung des Kraftfahrzeugs (11) zeigenden Oberflächer zumindest dem oberen Teil des Fahrzeugsitzes oder einer Kopfstütze (20) bzw. der Rückseite (21) der Kopfstütze angepaßt ist.

17. Vorrichtung nach einem der vorhergehenden Ansprüche, **dadurch gekennzeichnet**, daß die eine Erhebung (5) fest und die andere Erhebung (6) über eine im Abdeckteil (3) vorgesehene Öffnung (22) lösbar mit dem Abdeckteil (3) verbunden ist.

18. Vorrichtung nach einem der vorhergehenden Ansprüche, **dadurch gekennzeichnet,** daß die beiden Abdeckteile (2, 3) und/oder die Erhebungen (5, 6) aufeinanderklappbar ausgebildet sind.
